# EUROPEAN PATENT APPLICATION

(11) **EP 3 473 929 A1**
(43) Date of publication of application: **24.04.2019**
(21) Application number: 18200325.1
(22) Date of filing: 15.10.2018
(51) Int. Cl.: F23L 7/00, F23C 9/08, F23D 14/32

(54) **METHOD FOR MINIMIZING NOX EMISSIONS DURING POX BASED SYNGAS PLANT STARTUP**

(30) Priority: 18.10.2017 US 201715787358
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: ROESCH, Alexander, HOUSTON, TX Texas 77024 (US); KRIMLOWSKI, Paul Mandred, 75007 PARIS (FR); LEHMANN, Maik, 75007 PARIS (FR)
(74) Representative: Conan, Philippe Claude

(57) **Abstract**

A method for heating a partial oxidation reactor system including a burner system is provided. The method includes utilizing a flue gas stream derived from combustion process using an oxygen rich stream and a hydrocarbon fuel stream. The method may include a first burner system utilized during normal plant operation performing partial combustion, a second burner system utilized for heating during start-up phase performing complete combustion. The first burner system may be different than, or the same as, the second burner system. The method may include a second flue gas stream exiting the partial oxidation reactor, and wherein at least a portion of the second flue gas stream is recycled back to the burner system. The method may include a third flue gas stream derived from a downstream located equipment, wherein at least of portion of the third flue gas stream is recycled back to the burner system.

## Description

### Background

A substantially amount of the world's nitrogen oxides emissions are generated by industrial combustion processes. Nitrogen oxides are considered as a criteria pollutant since it is contributing to acid rain and photochemical smog. Stringent regulations on NOx emission limits and emission control systems were established in most industrialized countries and the limits for NOx emissions are becoming successively more stringent. In California, for instance, current emission limits for criteria pollutant such as NOx, SOx, CO or VOC of less than 2lb/day have been imposed in certain counties.

During recent years, low NOx producing burners as well as selective catalytic reduction units (SCR-Units) have been installed in large quantities and significantly contributed to the reduction of NOx emissions.

However, the goal of zero emission is not yet achieved, thus further innovation and development is required. Most of the improvements are focusing on the emissions occurring during normal plant operation. This makes sense since the largest amount of the pollutants is generated during the main operation phase. However, a significant amount of emissions is also generated during start-up and shut down periods of those industrial plants. Often during the start-up period, the NOx reduction systems are not yet fully in operation and consequently emissions are disposed to the atmosphere in an uncontrolled manner. Since the NOx emissions during normal operation phase is reduced due to the installation of for instance SCR-units the contribution of start-up emissions on the total emissions is increasing. Therefore, this invention is focusing on the minimization of start-up related NOx emissions of a partial oxidation based synthesis gas production plant.

The POX reactor operates typically in two modes. The first mode is the start-up phase where the reactor and its internal insulation is heated close to its operating temperature or at least to the auto-ignition temperature of the feedstock. This first mode may be also called heating phase. For the heating phase typically a dedicated start-up burner or start-up gun is mounted to the reactor combusting a hydrocarbon fuel stream with air generating a hot flue gas for heating the reactor. In some cases, the start-up burner may not be mounted directly to the reactor but rather be located next to the reactor and the hot flue gas is routed by means of a temporary piping system or high temperature piping hose system into the reactor.

The second mode is the normal operating phase where the partial oxidation process is taking place generating the synthesis gas. During this mode the feedstock and oxygen stream is introduced to the reactor and autoignited due to the high temperature. For the normal operating mode, a dedicated process burner sometime also called run gun is used.

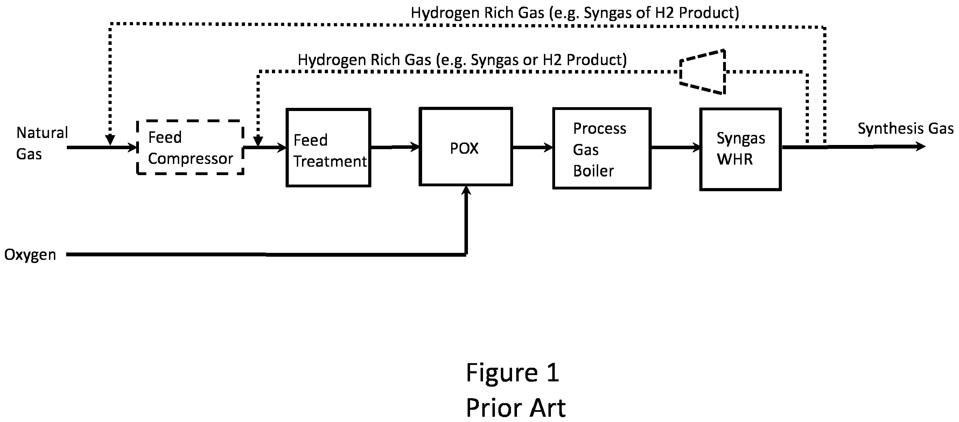

Figure 1 illustrates a typical partial oxidation based synthesis gas production plant as known to the art. A light hydrocarbon feedstock, natural gas in this example, is fed into a POX burner reactor system. Depending on the available natural gas supply pressure, a natural gas feed compressor may be needed. The natural gas feedstock may contain components leading to the formation of unwanted component in the synthesis gas. Such a component may be for instance sulfur and necessary treatment may be required prior introducing the natural gas to the POX reactor. A hydrogen containing stream such as for instance a part of the generated synthesis gas may be added to the feedstock stream prior the feed treatment step.

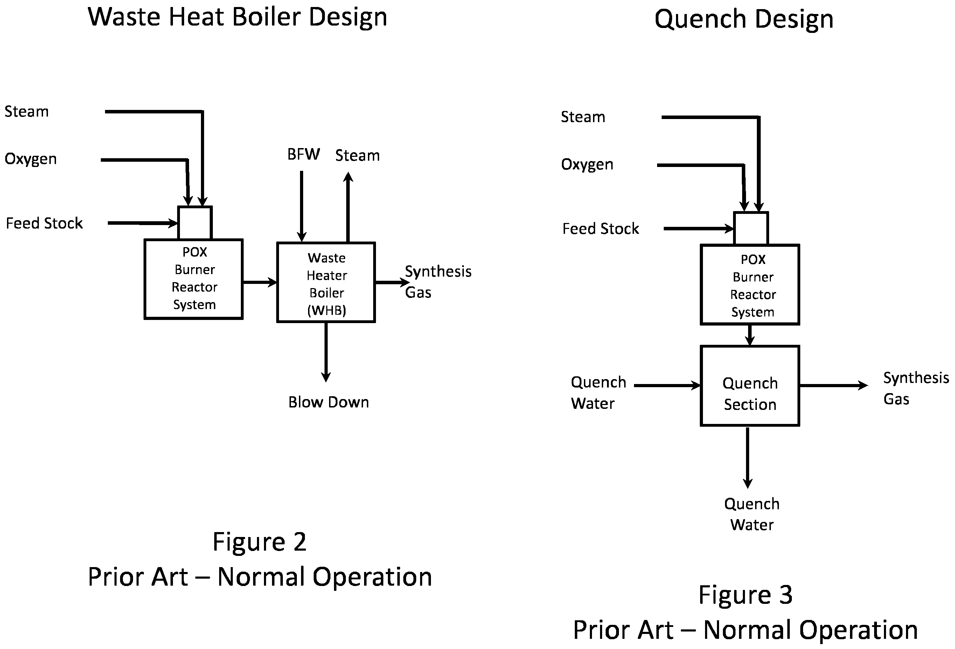

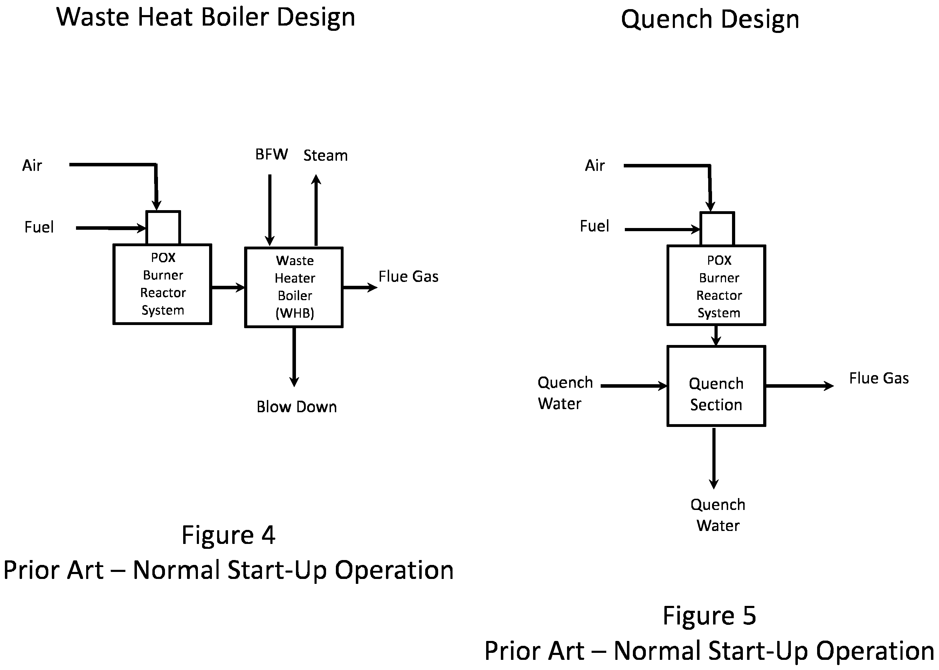

In the POX reactor the synthesis gas is generated by partial oxidation also named partial combustion of the natural gas using an oxygen containing stream. The synthesis gas leaving the POX reactor system typically with a temperature ranging between 980-1530 °C (1800-2800 °F). As illustrated in Figure 2 (normal operation) and Figure 4 (start-up operation), the hot exhaust gas may be cooled in a waste heat boiler (WHB), thereby producing steam which may be useful elsewhere in the plant or exported to other consumers and thus improving the thermal efficiency of the facility.

As illustrated in Figure 3 (normal operation) and Figure 5 (start-up operation), in cases where no steam is required the hot synthesis gas from the POX reactor may be cool down without steam generation by admixing a water stream and thus quenching the synthesis gas. However, the synthesis gas may be further cooled recovering sensible heat by preheating other process or utility streams. This cooling section may be design in various configurations and is typically called syngas waste heat recovery section. Contained steam in the syngas may be condensed and the water may be removed prior the syngas is utilized somewhere else in the downstream process.

### Summary

The present invention is directed to a method for heating a partial oxidation reactor system including a burner system is provided. The method includes utilizing a flue gas stream derived from combustion process using an oxygen rich stream and a hydrocarbon fuel stream. The method may include a first burner system utilized during normal plant operation performing partial combustion, a second burner system utilized for heating during start-up phase performing complete combustion. The first burner system may be different than the second burner system. The first burner system may be the same as the second burner system.

The method may include a second flue gas stream exiting the partial oxidation reactor, and wherein at least a portion of the second flue gas stream is recycled back to the burner system. The method may include a third flue gas stream derived from a downstream located equipment, wherein at least of portion of the third flue gas stream is recycled back to the burner system. The flue gas may be injected directly to the burner reactor system or is mixed with a fuel stream and/or an oxygen stream prior entering the burner system. At least a portion of an external CO2 containing stream may be injected directly to the burner reactor system or may be mixed with a fuel stream and/or an oxygen stream prior entering the burner system.

The oxygen rich stream may contain more than 21% oxygen. The partial oxidation burner reactor system may also include a catalytic section and may operate as an autothermal reformer. The hydrocarbon fuel may be natural gas or any other gaseous fuel stream when entering the burner reactor system. The second burner may be directly mounted to the POX reactor. The second burner may not be directly mounted to the POX reactor but may be connected with a temporary piping system. The flue gas stream may contain less than 40 ppm of NO2 and NO3 combined.

### Brief Description of the Drawings

For a further understanding of the nature and objects for the present invention, reference should be made to the following detailed description, taken in conjunction with the accompanying drawings, in which like elements are given the same or analogous reference numbers and wherein:
- Figure 1 is a schematic representation of a typical partial oxidation based syngas plant, as is known to the art.
- Figure 2 is a schematic representation of a typical partial oxidation reactor system during normal operation with a waste heat boiler configuration, as is known to the art.
- Figure 3 is a schematic representation of a typical partial oxidation reactor system during normal operation with a quench section, as is known to the art.
- Figure 4 is a schematic representation of a typical partial oxidation reactor system during start-up operation with a waste heat boiler configuration, as is known to the art.
- Figure 5 is a schematic representation of a typical partial oxidation reactor system during start-up operation with a quench section, as is known to the art.
- Figure 6 is a schematic representation of a typical partial oxidation reactor system during start-up operation in accordance with one embodiment of the present invention.
- Figure 7 is a schematic representation of a typical partial oxidation reactor system during start-up operation in accordance with another embodiment of the present invention.

### Description of Preferred Embodiments

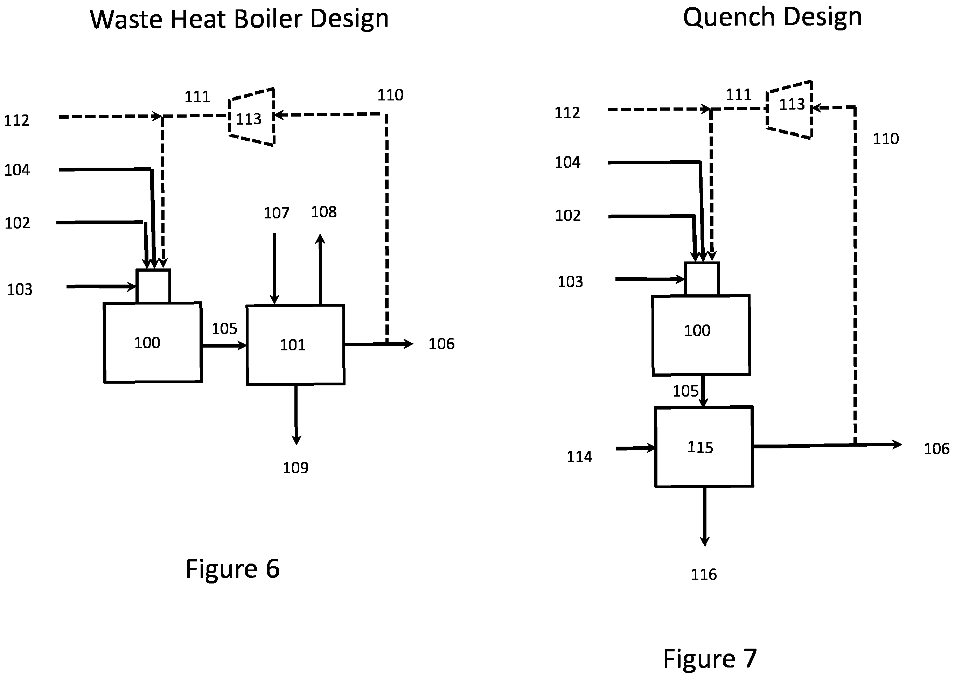

### Element Numbers as identified in Figure 6 and Figure 7

100 = POX burner and reactor system comprising a burner devise and a reactor device
101 = Waste Heat Boiler (WHB)
102 = Oxygen Stream
103 = Fuel Stream e.g. Natural Gas
104 = Cooling Stream e.g. Steam or Water
105 = Low NOX Flue Gas exiting the POX Reactor system during start-up phase
106 = Low NOx Flue Gas downstream waste heat boiler of quench section to atmosphere
107 = Boiler Feed Water
108 = Steam
109 = Boiler Blow Down
110 = Low NOx Flue Gas upstream of the recycle device
111 = Recycled low NOx Flue Gas sent to POX burner reactor system
112 = Flue Gas or CO2 rich stream imported from another process unit
113 = Recycle device e.g. blower, compressor, ejector
114 = Quench water
115 = Quench section downstream POX burner reactor system
116 = Separated quench water from Low NOX flue gas

Illustrative embodiments of the invention are described below. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

This invention relates to a method for producing a low NOx containing flue gas stream during the heating phase of a partial oxidation reactor system. In one embodiment, the current invention also addresses the revamping of existing partial oxidation reactor system, with a focus on avoiding or minimizing start-up emissions of already existing partial oxidation reactor system. Considering that on a global basis more than 100 partial oxidation reactor systems are in service utilizing gaseous, liquid and solid feedstock (e.g. natural gas, residual oil, petrochemical coke, municipal waste or coal) a significant contribution to the reduction of NOx emission can be achieved by this invention.

In a typical start-up mode, in order to heat the reactor system and its refractory to temperatures in the same order as the normal operating temperature 980-1530 °C (1800-2800 °F), but at least to the auto ignition temperature of the feed stream, a start-up burner system is typically installed. The start-up burner system typically uses a gaseous fuel such as natural gas, with air used as the oxidant. During this combustion, NOx is formed due to the presence of nitrogen in the combustion air and natural gas. The start-up burner is firing directly into the reactor thus the hot flue gas is heating the reactor and it's refractory to the required temperatures. The generated flue gas is sent though the reactor system to the reactor outlet where it is released to the atmosphere generating an uncontrolled NOx emission source. Depending on the selected plant design the flue gas may be sent through the quench section or the waste heat boiler section prior realizing to the atmosphere in an uncontrolled manner. A steam driven ejector may be installed creating an under-pressure in the reactor system supporting the flow regime during the heating phase by generating an under-pressure in the reactor and safely releasing the flue gas to atmosphere. In order to avoid damages to the refractory of the reactor system the heating rate is typically in the range of 40-80 °C/hr and thus the depending on the selected plant design the heating phase may take 15-30 hours. After the heating phase is completed the start-up burner is replaced with the main process burner. After the start-up burner has been exchanged the feedstock and oxygen can be introduced to the reactor via the main process burner. The feedstock and oxygen will be mixed when passing through the main process burner and will be auto ignited when entering the heated reactor system enabling the syngas generation mode.

Referring now to Figure 6, one embodiment of the present invention is illustrated. In order to avoid or significantly reduce the formation of nitrogen oxides during the combustion process, high purity oxygen stream **102** is used for combusting start-up fuel stream **103** in POX burner reactor system **100.** Due to the usage of pure oxygen, the presence of nitrogen from air, as a source for nitrogen oxide formation is eliminated. In case the fuel gas contains any significant amount of nitrogen a low nitrogen containing fuel gas such as high purity LNG could be used alternatively thus the presence of nitrogen during the start-up combustion phase is eliminated.

Due to the combustion with pure oxygen the burner system is now experiencing very high temperatures, and burner cooling with suitable a burner cooling media **104** such as cooling water or steam may be required. The low NOx containing flue gas generated during the oxy-combustion is routed though the POX reactor and therein heating the internal insulation, or refractory lining, of the reactor. Flue gas **105** leaves the reactor and may be sent to downstream located boiler system **101** prior releasing the flue gas to atmosphere **106.** Boiler system **101** may be a waste heat boiler, wherein boiler feed water **107** is vaporized, and possibly superheated, and thus produce steam stream **108** and blowdown stream **109.**

An alternative plant design is presented in Figure 7, wherein when exiting POX reactor **100** flue gas **105** may be sent through a quench section **115,** where the flue gas **105** is cooled by means of direct contact with water stream **114** in quench section **115** prior the flue gas is release to atmosphere **106.**

As mentioned above due to the combustion with pure oxygen, the burner system is facing very high temperatures. In one embodiment of the invention at least a portion **110** of the generated low NOX flue gas **106** may be recycled back to the burner system by means of a recycle blower **113.** The pressurized, recycled stream **111** may be mixed with individual oxygen stream **102** or fuel stream **103** before or may be directly introduced into the POX burner reactor system. Thus depending on the amount of recycled flue gas **110** the temperature of the oxy-combustion and heating process of the reactor is subject to more sophisticated control, since the volume flow through the reactor is higher than without recirculation of flue gas establishing a more uniform heat profile inside the reactor during the heating phase. Since the introduction of pressurized, recycled stream **111** serves to cool the POX burner system, and may also reduce the NOx output at the flue gas since there will be less nitrogen present in the oxidant stream and the lower temperature will reduce the creation of thermal NOx. Streams **111** and/or **112** may have less than 40 ppm, preferably less than 10 ppm, more preferably less than 5 ppm of NO2 and NO3 combined.

In another embodiment of the invention a CO2 rich stream, or flue gas stream, **112** may be introduced into the system from an external source. The external source (not shown) may be an oxycombustion boiler. CO2 rich stream **112** may the provide at least a portion of the cooling stream that is introduced to the POX burner reactor system, as described above. In another embodiment, CO2 rich stream **112** may be combined with pressurized, recycled stream **111** and then introduced into the POX burner reactor system as a cooling medium **117.**

It will be understood that many additional changes in the details, materials, steps and arrangement of parts, which have been herein described in order to explain the nature of the invention, may be made by those skilled in the art within the principle and scope of the invention as expressed in the appended claims. Thus, the present invention is not intended to be limited to the specific embodiments in the examples given above.

## Claims

1. A method for heating a partial oxidation reactor system comprising a burner system, the method comprising utilizing a flue gas stream (111) derived from combustion process (100) using an oxygen rich stream (102) and a hydrocarbon fuel stream (103).

2. The method of claim 1, the burner system further comprising a first burner system utilized during normal plant operation performing partial combustion, a second burner system utilized for heating during start-up phase performing complete combustion.

3. The method of claim 2, wherein the first burner system is different than the second burner system

4. The method of claim 2, wherein the first burner system is the same as the second burner system

5. The method of claim 1, further comprising a second flue gas stream exiting the partial oxidation reactor, and wherein at least a portion of the second flue gas stream is recycled back to the burner system.

6. The method of claim 1, further comprising a third flue gas stream derived from a downstream located equipment, wherein at least of portion of the third flue gas stream is recycled back to the burner system.

7. The method of claim 1, wherein the flue gas is injected directly to the burner reactor system or is mixed with a fuel stream and/or an oxygen stream prior entering the burner system.

8. The method of claim 1, wherein at least a portion of an external CO2 containing stream is injected directly to the burner reactor system or is mixed with a fuel stream and/or an oxygen stream prior entering the burner system.

9. The method of claim 1, wherein the oxygen rich stream contains more than 21% oxygen.

10. The method of claim 1, wherein the partial oxidation burner reactor system further comprises a catalytic section and operates as an autothermal reformer.

11. The method of claim 1, wherein the hydrocarbon fuel is natural gas or any other gaseous fuel stream when entering the burner reactor system.

12. The method of claim 2, wherein the second burner is directly mounted to the POX reactor.

13. The method of claim 2, wherein the second burner is not directly mounted to the POX reactor buy connected with a temporary piping system.

14. The method of claim 1, wherein the flue gas stream contains less than 40 ppm of NO2 and NO3 combined.
